(19) Europäisches Patentamt
European Patent Office
Office européen des brevets

(11) EP 4 575 426 A1

(12) EUROPEAN PATENT APPLICATION

(43) Date of publication:
**25.06.2025 Bulletin 2025/26**

(21) Application number: **24213759.4**

(22) Date of filing: **19.11.2024**

(51) International Patent Classification (IPC):
***G01J 1/02*** *(2006.01)* ***G01J 5/00*** *(2022.01)*
***G01N 21/15*** *(2006.01)* ***G01J 5/08*** *(2022.01)*
*G01J 5/02* *(2022.01)*

(52) Cooperative Patent Classification (CPC):
**G01J 1/0266; G01J 5/0018; G01J 5/0846; G01J 5/0859;** G01J 5/025; G01J 5/07; G01J 2005/0077

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.12.2023 IN 202311087203**

(71) Applicant: **Life Safety Distribution GmbH**
**1180 Rolle (CH)**

(72) Inventors:
- **VARTAK, Sameer**
  **Charlotte, 28202 (US)**
- **KHURANA, Mohit**
  **Charlotte, 28202 (US)**
- **R, Ranjith**
  **Charlotte, 28202 (US)**
- **GANESH, Bindu**
  **Charlotte, 28202 (US)**
- **KOTHARI, Sanjay**
  **Charlotte, 28202 (US)**
- **EBRAHIM, Shabharudin**
  **Charlotte, 28202 (US)**
- **HANAGANDI, Sheetal**
  **Charlotte, 28202 (US)**

(74) Representative: **Haseltine Lake Kempner LLP**
**Cheapside House**
**138 Cheapside**
**London EC2V 6BJ (GB)**

(54) **SYSTEMS AND METHODS FOR MISALIGNMENT AND OBSTACLE INFORMATION DIAGNOSTICS FOR FLAME DETECTION**

(57) A flame detection system is disclosed. The flame detection system comprises one or more sensors to detect one or more targets within a field of view (FOV). Further, at least one imaging device is installed based on a distance between one or more sensors, one or more targets, and the FOV. The at least one imaging device is configured to capture one or more real time images of one or more targets within the FOV. Further, one or more processors are communicatively coupled to one or more sensors and at least one imaging device. The one or more processors are configured to receive one or more real time images, compare one or more real time images with at least one reference image and determine a misalignment information, obstacle information, or misalignment and obstacle information within the FOV based at least on comparison.

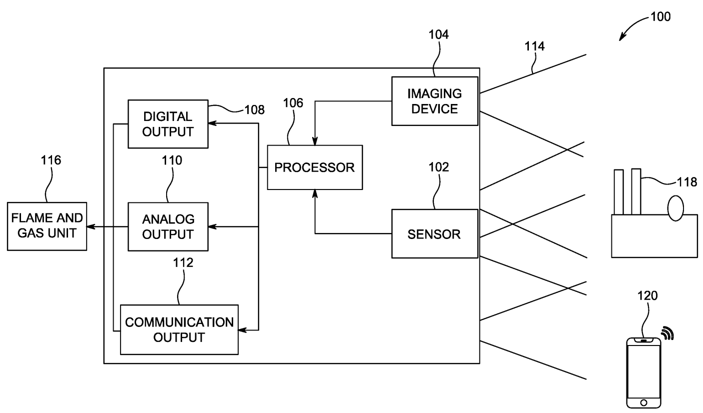


FIG. 1



Processed by Luminess, 75001 PARIS (FR)

## Description

### TECHNOLOGICAL FIELD

Example embodiments of the present disclosure relate generally to flame detection systems, and more particularly, to a system and a method for misalignment and obstacle information diagnostics within a field of view (FOV) of a flame detector.

### BACKGROUND

Flame detection systems are point detectors that use a single pixel non-imaging detectors to collect light from all directions within a field of view (FOV) and subsequently utilize multiple algorithms to identify flames, false alarms, or flame in presence of a false alarm. Existing infrared (IR) sensor-based flame detection systems do not provide any information about the FOV that is, what the flame detection system is viewing or seeing. Certain regions within the FOV hold more significance for flame detection than other regions. Some areas require highly precise flame detection, while in some areas flame detection is not so critical. Such lack of this information leads to inaccurate installation of the flame detection systems, misalignment problems and poor obstacle identification. Further, the flame detection systems inhibit the ease of installation and compromises the accuracy of flame detection, as well as the ability to detect objects for the flame detection.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### BRIEF SUMMARY

The following presents a summary of some example embodiments to provide a basic understanding of some aspects of the present disclosure. This summary is not an extensive overview and is intended to neither identify key or critical elements nor delineate the scope of such elements. It will also be appreciated that the scope of the disclosure encompasses many potential embodiments in addition to those here summarized, some of which will be further described in the detailed description that is presented later.

In an example embodiment, a system is disclosed. The system comprises one or more sensors that are configured to detect one or more targets within a field of view (FOV) of the one or more sensors. Further, at least one imaging device is installed based on a distance between the one or more sensors, the one or more targets, and the FOV of the one or more sensors. The at least one imaging device is configured to capture one or more real time images of the one or more targets within the FOV. Further, the system comprises one or more processors that are communicatively coupled to the one or more sensors and the at least one imaging device. The one or more processors are configured to receive the one or more real time images from the at least one imaging device, compare the one or more real time images with at least one reference image and determine a misalignment information, obstacle information, or misalignment and obstacle information within the FOV based at least on the comparison.

In some embodiments, the one or more sensors are one or more infrared (IR) sensors, flame sensors, or photodiodes. In some embodiments, the FOV comprises an array of pixels. Each pixel of the array of pixels is associated with a corresponding one or more zones defined by a user. Further, each of the corresponding one or more zones are defined with a criticality level. The criticality level of each respective zone is one of non-critical, critical, or highly critical.

In some embodiments, the one or more processors are configured to split the one or more real time images into a plurality of infrared (IR) channels and the plurality of IR channels are masked with the one or more zones defined with the criticality level using at least one filter.

In some embodiments, the one or more processors are further configured to identify a plurality of key points. The plurality of key points comprising a bright contrast edge, curved coordinate points, or the bright contrast edge and curved coordinate points on the masked plurality of IR channels. In some embodiments, the at least one reference image is obtained by comparing at least two consecutive real time images from the one or more real time images based at least on one or more coordinates of each of the one or more real time images.

In some embodiments, at least one accelerometer is configured to determine change in the one or more coordinates of the one or more sensors for a set time delay specified by a user to determine the misalignment information based at least on the comparison.

In some embodiments, the non-critical zone corresponds to a zone in which misalignment and/or obstacle is not to be detected, highly critical zone corresponds to a zone in which misalignment and/or obstacle is detected, and a critical zone corresponds to a zone in which misalignment or obstacle is to be detected.

In some embodiments, for the determination of misalignment information, the plurality of IR channels is masked based on the identified key points. In some embodiments, for the determination of obstacle information, the plurality of IR channels is masked based on the criticality level. In some embodiments, the one or more sensors and the at least one imaging device are spatially calibrated to maintain same or similar FOV. In some embodiments, the one or more processors are further configured to send one or more notifications, via a communication device, to a user or a remote server based at least on the determined misalignment information, obstacle information, or misalignment and obstacle information within the FOV.

In another example embodiment, a method is disclosed. The method comprises steps of detecting, via one or more sensors, one or more targets within a field of view (FOV) of the one or more sensors; capturing, via at least one imaging device, one or more real time images of the one or more targets within the FOV; and receiving, via one or more processors, the one or more real time images from the at least one imaging device. Further, the method comprises steps of comparing, via the one or more processors, the one or more real time images with at least one reference image; and determining, via the one or more processors, misalignment information, obstacle information, or misalignment and obstacle information within the FOV based at least on the comparison.

In some embodiments, the method comprises steps of splitting, via the one or more processors, one or more real time images into a plurality of IR channels; masking, via the one or more processors, the plurality of IR channels with the one or more zones with the criticality level; and identifying, via the one or more processors, a plurality of key points. The plurality of key points comprising a bright contrast edge, curved coordinate points, or the bright contrast edge and curve coordinate points on the masked plurality of IR channels.

In some embodiments, the method further comprises determining, via the one or more processors, a change in the one or more coordinates of the one or more sensors for a set time delay specified by the user to determine the misalignment information based at least on the comparison of the at least two consecutive real time images.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the present disclosure in any way. It will be appreciated that the scope of the present disclosure encompasses many potential embodiments in addition to those here summarized, some of which will be further described below.

## BRIEF DESCRIPTION OF THE DRAWINGS

Having thus described certain example embodiments of the present disclosure in general terms, reference will hereinafter be made to the accompanying drawings, which are not necessarily drawn to scale, and wherein:

FIG. 1 illustrates an example embodiment of a system for determining misalignment and obstacle information in accordance with an example embodiment of the present disclosure;

FIG. 2A illustrates synchronization of one or more sensors and at least one imaging device of the system in accordance with an example embodiment of the present disclosure;

FIG. 2B illustrates the adjusted field of view of the at least one imaging device of the system in accordance with an example embodiment of the present disclosure;

FIGS. 3A-3B illustrate masking of one or more real time images of the system in accordance with an example embodiment of the present disclosure;

FIG. 4A illustrates the one or more real time images split into a plurality of infrared (IR) channels in accordance with an example embodiment of the present disclosure;

FIG. 4B illustrates the one or more real time images having misalignment information determined by the system in accordance with an example embodiment of the present disclosure;

FIG. 5A illustrates the one or more real time images split into the plurality of IR channels in accordance with an example embodiment of the present disclosure;

FIG. 5B illustrates the one or more real time images having obstacle information determined by the system in accordance with an example embodiment of the present disclosure;

FIG. 6 illustrates an exemplary scenario of installation of the system in accordance with an example embodiment of the present disclosure;

FIG. 7 illustrates an exemplary scenario of determining the misalignment information in accordance with an example embodiment of the present disclosure;

FIG. 8 illustrates an exemplary scenario of determining the obstacle information in accordance with an example embodiment of the present disclosure;

FIG. 9 illustrates a flowchart showing steps of a method for determining misalignment and obstacle information in accordance with an example embodiment of the present disclosure;

FIG. 10 illustrates a flowchart showing steps of a method for determining misalignment information in accordance with an example embodiment of the present disclosure; and

FIG. 11 illustrates a flowchart showing steps of a method for determining obstacle information in accordance with an example embodiment of the present disclosure.

## DETAILED DESCRIPTION

Some embodiments will now be described more fully hereinafter with reference to the accompanying drawings, in which some, but not all, embodiments of the present disclosure are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The present disclosure provides various embodiments of a system and a method for determining misalignment and obstacle information within a field of view (FOV) of sensors. Embodiments may offer high-resolution thermal imaging to enable precise and early identification of flames. Embodiments may provide accurate installation, notification to misalignment and blocked view of detectors to increase the accuracy in detection of flames. Embodiments may provide real-time monitoring capability to ensure immediate response to any misalignment and obstacles present in the FOV. Embodiments may further provide better installation, a user may see what sensors of the system are detecting and known fire sources that may be taken out of the FOV, for example, a flare stack. Additionally, various embodiments may be integrated into various settings, from industrial facilities to fire detection systems, providing robust and reliable flame detection solutions for improved fire safety and reduced risks to life and property.

FIG. 1 illustrates an example embodiment of a system 100 for determining misalignment and obstacle information, in accordance with an example embodiment of the present disclosure. The system 100 may comprise one or more sensors 102, at least one imaging device 104, one or more processors 106, at least one digital output 108, at least one analog output 110, and at least one communication output 112.

The one or more sensors 102 may be communicatively coupled to the at least one imaging device 104. In some embodiments, the one or more sensors 102 may include one or more infrared (IR) sensors, flame sensors, or photodiodes. The one or more sensors 102 may detect one or more targets within a field of view (FOV) 114 of the one or more sensors 102. Each of the one or more sensors 102 and imaging device 104 may have its own field of view. The one or more sensors 102 may be configured to analyze the FOV 114 of the captured one or more images.

In some embodiments, the system 100 may include the at least one imaging device 104. The at least one imaging device 104 may be installed based on distance between one or more sensors 102, the one or more targets, and the FOV 114 of the one or more sensors 102. The at least one imaging device 104 may capture one or more real time images in the FOV 114. The one or more real time images may include precise recording of scenes or subjects in the FOV 114. It may be noted that the FOV 114 may correspond to an observable area that an individual may visualize via the at least one imaging device 104. In some embodiments, the at least one imaging device 104 may include at least one of a multi-pixel digital camera or a dual infrared (IR) camera. The at least one imaging device 104 may include various capturing modes and storage options. The at least one imaging device 104 may enable sharing of visual data in the form of captured one or more real time images. Further, the FOV 114 may comprise an array of pixels. In some embodiments, each pixel from the array of pixels may be an individual picture element that make up the visual content of the captured one or more real time images. Further, each pixel of the array of pixels may be associated with a corresponding one or more zones defined by a user.

In some embodiments, the one or more sensors 102 and the at least one imaging device 104 may be spatially calibrated to maintain same or similar FOV 114. As shown in FIG. 2A, the one or more sensors 102 and the at least one imaging device 104 may be spatially calibrated to analyze the FOV 114 of the captured one or more real time images, indicated by an arrow 200. Further, the arrow 200 may indicate the process of restricting the FOV 114 of the one or more sensors and the at least one image capturing device 104. At first, a FOV 202 of the at least one imaging device 104 may be greater than the FOV 114 of the one or more sensors 102. Further, the one or more sensors 102 and the at least one imaging device 104 may be spatially calibrated to restrict and process only the part of the one or more real time images that is an intersection of the one or more sensors 102 and the at least one imaging device 104. Such spatial calibration may ensure that each pixel from the array of pixels may have same or nearly the same FOV 114. It will be apparent to one skilled in the art that the at least one imaging device 104 and the one or more sensors 102 may be spatially calibrated by correlating one or more stored images against known values and then apply the calibration to non-calibrated one or more real-time images. In some embodiments, the same FOV 114 of the array of pixels may be ensured by removing parallax and different orientations of the captured one or more real time images.

In some embodiments, the spatial calibration may include the process of aligning and synchronizing data from the at least one imaging device 104 and the one or more sensors 102 to accurately study the FOV 114. In one example, a dual IR camera and an IR sensor may be spatially calibrated to precisely locate and measure the temperature of a flame within the FOV 114. Further, the spatial calibration may ensure that the one or more real time images captured by the at least one imaging device 104 and the thermal radiation or infrared (IR) emissions detected and measured from the captured one or more real time images by the one or more sensors 102 data correspond to the same region of interest, allowing for accurate flame detection.

The system 100 may further comprise the one or more processors 106. The one or more processors 106 may be communicatively coupled to the one or more sensors 102 and the at least one imaging device 104. In some embodiments, the FOV 202 of the at least one imaging device 104 may be adjusted with the FOV 114 of the one or more sensors 102, as described in conjunction with FIG. 2B. The FOV 202 of the at least one imaging device 104 may be calculated using one or more known parameters. The one or more known parameters may include the distance between the one or more sensors 102 and the at least one imaging device 104, denoted by "ds". Further, the one or more known parameters may include the distance of an object or a scene in the one or more real time images from the one or more sensors 102, denoted by "D". Further, the one or more known parameters may include half of the FOV 114 at a given distance, denoted by "$\theta$". Further, the one or more known parameters may include "H" that may be defined as the half the diameter of the FOV 114 of the one or more sensors 102. "H" may be calculated using: $H = D \times \tan\theta$. In one example, H may be calculated as 16.20 metres (m) when $\theta$ is taken as 45 degrees and D is taken as 10 m. It may be noted that the $\theta$ may reduce gradually with increase in D. Further, the FOV 202 of the at least one imaging device 104 may be measured on one side, denoted by "$\alpha$". "$\alpha$" may be measured using: $\alpha = \tan^{-1}\frac{H-ds}{D}$. Further, the FOV 202 of the at least one imaging device 104 may be measured on other side, denoted by "$\beta$", "$\beta$" may be measured using: $\beta = \tan^{-1}\frac{\mathrm{H+ds}}{\mathrm{D}}$.

In some embodiments, the one or more processors 106 may receive the captured one or more real time images. Further, the one or more processors 106 may be configured to compare the one or more real time images with at least one reference image. In some embodiments, the at least one reference image may be obtained by comparing at least two consecutive real time images from the one or more real time images based at least on one or more coordinates of each of the one or more real time images. In an example embodiment, the one or more coordinates may include at least x, y, and z coordinates. Further, the one or more processors 106 may be configured to determine a misalignment information, obstacle information, or misalignment and obstacle information within the FOV based at least on the comparison. It may be noted that the one or more sensors 102 and the at least one image capturing device 104 may together be referred to as a "flame detector".

In some embodiments, the system 100 may include at least one accelerometer (not shown) to determine change in the one or more coordinates of the one or more sensors 102 for a set time delay specified by the user to determine the misalignment information based at least on the comparison. As discussed above, the one or more real time images may be divided into the array of pixels. Each pixel of the array of pixels may be masked with the one or more zones. Further, each of the corresponding one or more zones may be defined with a criticality level. The criticality level of each respective zone may be one of non-critical, critical, or highly critical. The non-critical zone may correspond to a zone in which misalignment and/or obstacle is not to be detected. The highly critical zone may correspond to a zone in which misalignment and/or obstacle is detected. The critical zone may correspond to a zone in which misalignment or obstacle is to be detected. It may be noted that the at least one portion of the array of pixels may be associated with the corresponding one or more zones using Artificial Intelligence (AI), Machine Learning (ML), video analytics or historical data. Further, the one or more processors 106 may be configured to split the one or more real time images into a plurality of infrared (IR) channels. The plurality of IR channels may be masked with the one or more zones defined with the criticality level using at least one filter (not shown). Further, the one or more processors 106 may be configured to identify a plurality of key points. The plurality of key points may comprise a bright contrast edge, curved coordinate points, or the bright contrast edge and curved coordinate points on the masked plurality of IR channels.

Referring to FIG. 3A, the at least one imaging device 104 may display an overlapped circle 300 with respect to a distance to indicate the FOV 114, based on the identified key points. In an example embodiment, the one or more real time images with the overlapped circle 300 may indicate the distance of the one or more targets in the overlapped circle 300 from the at least one imaging device 104. Referring to FIG. 3B, once FOV 114 may be confirmed, the one or more zones may be defined in the FOV 114. For example, the overlapped circle 300 may indicate the non-critical zone and the overlapped square 302 may indicate the highly critical zone. Further, once the FOV 114 and the one or more zones in the FOV 114 may be defined, the user may set a time delay in seconds. It may be noted that for the determination of misalignment information, the plurality of IR channels may be masked based on the identified key points. Further, it may be noted that for the determination of obstacle information, the plurality of IR channels may be masked based on the criticality level.

In some example embodiments, the one or more processors 106 may include suitable logic, circuitry, and/or interfaces that are operable to execute one or more instructions stored in a memory (not shown) to perform predetermined operations. In some embodiments, the one or more processors 106 may store the one or more real time images in a non-volatile memory of the one or more processors 106. In some embodiments, the one or more processors 106 may be configured to decode and execute any instructions received from one or more other electronic devices or server(s). The one or more processors 106 may be configured to execute one or more computer-readable program instructions, such as program instructions to carry out any of the functions described in this description. Further, the one or more processors 106 may be implemented using one or more processor technologies known in the art. Examples of the processor include, but are not limited to, one or more general purpose processors (e.g., INTEL® or Advanced Micro Devices® (AMD) microprocessors) and/or one or more special purpose processors (e.g., digital signal processors or Xilinx® System On Chip (SOC) Field Programmable Gate Array (FPGA) processor).

Further, the memory may store a set of instructions and data. In some embodiments, the memory may include the one or more instructions that are executable by the processor to perform specific operations. It is apparent to a person with ordinary skill in the art that the one or more instructions stored in the memory enable the hardware of the system to perform the predetermined operations. Some of the commonly known memory implementations include, but are not limited to, fixed (hard) drives, magnetic tape, floppy diskettes, optical disks, Compact Disc Read-Only Memories (CD-ROMs), and magneto-optical disks, semiconductor memories, such as ROMs, Random Access Memories (RAMs), Programmable Read-Only Memories (PROMs), Erasable PROMs (EPROMs), Electrically Erasable PROMs (EEPROMs), flash memory, magnetic or optical cards, or other type of media/machine-readable medium suitable for storing electronic instructions.

Referring back to FIG. 1, the system 100 may further include the at least one digital output 108. The at least one digital output 108 may be coupled to the one or more processors 106. The at least one digital output 108 may generate temperature-related information in a discrete digital format. In some embodiments, the at least one digital output 108 may exist in binary form, representing temperature states as 1s and 0s. The temperature states may be easily processed and interpreted by digital devices such as microcontrollers, computers, or data acquisition systems. In some embodiments, the at least one digital output 108 may include a relay (not shown). Further, the at least one digital output 108 may allow precise temperature monitoring, triggering alarms, and data storage. Further, the at least one digital output 108 may be integrated with a flame and gas unit 116.

The system 100 may further include the at least one analog output 110. The at least one analog output 110 may be coupled to the one or more processors 106. The at least one analog output 110 may be in the form of voltage or current. The at least one analog output 110 may provide a continuous representation of temperature to enable real-time monitoring and analysis. In some embodiments, a level of the at least one analog output 110 may correspond to the detected temperature. Further, the at least one analog output 110 may be integrated with the flame and gas unit 116.

The system 100 may further include the at least one communication output 112. The at least one communication output 112 may be coupled to the one or more processors 106. The at least one communication output 112 may facilitate data transmission. In some embodiments, the at least one communication output 112 may include Highway Addressable Remote Transducer (HART), Modbus, TCP/IP. Further, the at least one communication output 112 may enable seamless connectivity between the system 100 and other monitoring and control devices. In some embodiments, the other monitoring and control devices may include supervisory control and data acquisition (SCADA) systems, PLCs (Programmable Logic Controllers).

In some example embodiments, the HART may provide a hybrid analog and digital signal, to allow real-time measurement data and device diagnostics over a single pair of wires. In another example embodiment, the Modbus is a widely adopted serial communication protocol that allows for easy data exchange between multiple devices, making it suitable for industrial applications. In another example embodiment, the TCP/IP is a standard internet protocol suite that extends connectivity beyond the local network to enable remote monitoring and control of the system. In some embodiments, the at least one communication output 112 may be integrated with the flame and gas unit 116.

In some embodiments, the system may be installed near an environment 118. In some embodiments, the environment 118 may be a fire prone area such as industrial petroleum sites. It will be apparent to one skilled in the art that the fire prone area is an area where fires are most likely to occur or have a higher tendency to occur.

In some embodiments, the system 100 may include a communication device 120. The one or more processors 106 may be configured to send one or more notifications, via the communication device 120, to the user or a remote server based at least on the determined misalignment and/or obstacle information. The communication device 120 may be a smartphone, a tablet, a personal computer, or any other communication device known in the art.

It will be apparent to one skilled in the art that above-mentioned components of the system 100 have been provided only for illustration purposes. In some embodiments, the system 100 may include some other components as well, without departing from the scope of the disclosure.

FIG. 4A illustrates the one or more real time images split into the plurality of IR channels, in accordance with an example embodiment of the present disclosure. FIG. 4B illustrates the one or more real time images having misalignment information determined by the system 100, in accordance with an example embodiment of the present disclosure. FIGS. 4A-4B are described in conjunction with FIGS. 1-3B.

In some embodiments, the one or more processors may be configured to split an image 400 of the one or more real time images into the plurality of infrared (IR) channels, as illustrated in FIG. 4A. The plurality of IR channels may be masked with the one or more zones defined with the criticality level using the at least one filter. For the determination of misalignment information, the plurality of IR channels may be masked based on the identified key points. The plurality of IR channels may include a R_channel (red channel) 402, a G channel (green channel) 404, and a B_channel (blue channel) 406, as shown in FIG. 4A.

Referring to FIG. 4B, at least one reference image may be obtained by comparing at least two consecutive real time images from the one or more real time images based at least on one or more coordinates of each of the one or more real time images. In some embodiments, successive frames of the one or more real time images may be taken at a plurality of times including T, T+1..., T+n, T+(n+1), T+(n+2) and so on. The successive frames of the one or more real time images may include at least frame 408 at T, frame 410 at T+1, frame 412 at T+n, frame 414 at T+(n+1), frame 416 at T+(n+2). Further, the misalignment information may be determined at T+(n+1) with reference to previous frame of T+n after a difference of the T+(n+1) and T + n. Further, the misalignment information may be determined based at least on a threshold limit set by the user. The misalignment information may be determined when the identified plurality of key points or the difference of the successive frames may exceed the threshold limit. As a result, (T+1) may be stored as the at least one reference image.

Further, the successive frames of T+(n+1), T+(n+2) may be compared with the at least one reference image. The difference between the at least one reference image and the successive frames may be greater than the threshold limit such that the at least one reference image - T+(n+1) is greater that the threshold limit, the at least one reference image - T+(n+2) is greater than the threshold limit and so on. As a result, the misalignment information may be consistent for the user set time delay such as 30 frames per second (fps) for 5 seconds that is 5 * 30fps. Therefore, for determining misalignment information, an additional secondary check may be done with the at least one accelerometer.

FIG. 5A illustrates the one or more real time images split into the plurality of IR channels, in accordance with an example embodiment of the present disclosure. FIG. 5B illustrates the one or more real time images having obstacle information determined by the system 100, in accordance with an example embodiment of the present disclosure. FIGS. 5A-5B are described in conjunction with FIGS. 1-3B.

As discussed above in FIG. 1, the one or more processors may be configured to split an image 500 of the one or more real time images into the plurality of infrared (IR) channels. The plurality of IR channels may be masked with the one or more zones defined with the criticality level using the at least one filter. For the determination of obstacle information, the plurality of IR channels may be masked based on the criticality level. Further, the plurality of IR channels may include a R_channel (red channel) 502, a G channel (green channel) 504, and a B _channel (blue channel) 506, as shown in FIG. 5A.

Referring to FIG. 5B, at least one reference image may be obtained by comparing at least two consecutive real time images from the one or more real time images based at least on one or more coordinates of each of the one or more real time images. In some embodiments, successive frames of the one or more real time images may be taken at a plurality of times including T, T+1..., T+n, T+(n+1), T+(n+2) and so on. The successive frames of the one or more real time images may include at least frame 508 at T, frame 510 at T+1, frame 512 at T+n, frame 514 at T+(n+1), and frame 516 at T+(n+2). Further, the obstacle information may be determined at T+(n+1) with reference to previous frame of T+n after a difference of the T+(n+1) and T + n. The obstacle information may be determined based at least on a threshold limited set by the user. The obstacle information may be determined when the identified plurality of key points or the difference of successive frames may exceed the threshold limit. As a result, (T+n) may be stored as the at least one reference image.

Further, the successive frames of T+(n+1), T+(n+2) may be compared with the at least one reference image. And the difference between the at least one reference image and the successive frames may be greater than the threshold limit such that the at least one reference Image - T+(n+1) is greater that the threshold limit, the at least one reference image - T+(n+2) is greater than the threshold limit and so on. As a result, the obstacle information may be consistent for the user set time delay such as 32 fps for 6 seconds that is 6 * 32 fps, then the obstacle information may be reported to the user.

FIG. 6 illustrates an exemplary scenario 600 of installation of the system 100, in accordance with an example embodiment of the present disclosure. FIG. 6 is described in conjunction with FIGS. 1-5B.

As discussed above in FIG. 1, the one or more sensors 102 and the at least one imaging deice 104 may be spatially calibrated to maintain same or similar FOV 114. The FOV 114 may be viewed on a user interface 602 of the communication device 120. Further, the FOV 114 may be viewed using an Android application or an IOS application. Further, the system 100 may communicate with the communication device 120 through Wi-Fi or any other network interface known in the art. Further, the FOV 114 may include the one or more zones.

In one example embodiment, the one or more zones may be marked with different circles to indicate the criticality level. The highly critical zone may be marked with a circle 604 (preferably red circle) having a distance of 200 feet (ft). The non-critical zone may be marked with a circle 606 (preferably orange circle) having a distance of 150ft. The non-critical zone may be marked with a circle 608 (preferably green circle) having a distance of 100ft. The one or more zones may be marked to represent what is the FOV 114 at different distances from the system 100.

FIG. 7 illustrates an exemplary scenario 700 of determining misalignment information, in accordance with an example embodiment of the present disclosure. FIG. 7 is described in conjunction with FIGS. 1-6.

As discussed above in FIG. 6, the FOV 114 may be viewed on the user interface 602 of the communication device 120. Further, the FOV 114 may be viewed using the Android application or the IOS application. In some embodiments, during installation of the system 100, at least one reference image may be stored in the memory of the one or more processors 106. Further, the user interface 602 may display information to store the at least one reference image. In one example, the information may include "store below image as reference to obstructed and misalignment". Further, the user interface 602 may include a button 702 to ask the user to confirm the at least one reference image. In one example, the button 702 may include "confirm ok to continue".

Further, the identified key points may be marked on the at least one reference image that is stored. Then, the identified key points may be compared with the other one or more real time images. Further, based on the comparison, the misalignment information may be determined. On determining the misalignment information, a warning may be indicated on the system 100. Further, a misaligned image 704 may be viewed on the user interface 602 of the communication device 120. In some embodiments, the user may navigate back to see the stored at least one reference image as indicated by an arrow 706.

FIG. 8 illustrates an exemplary scenario 800 of determining obstacle information, in accordance with an example embodiment of the present disclosure. FIG. 8 is described in conjunction with FIGS. 1-7.

As discussed above in FIGS. 6-7, the FOV 114 may be viewed on the user interface 602 of the communication device 120. Further, the FOV 114 may be viewed using the Android application or the IOS application. In some embodiments, during installation of the system 100, the at least one reference image may be stored in the memory of the one or more processors 106. Further, the user interface 602 may display information to store the at least one reference image. In one example, the information may include "store below image as reference to obstructed and misalignment". Further, the user interface 602 may include a button 802 to ask the user to confirm the at least one reference image. In one example, the button 802 may include "confirm ok to continue".

Further, the identified key points may be marked on the at least one reference image that is stored. Then, the identified key points may be compared with the other one or more real time images. Based on the comparison, the system 100 may determine the obstacle information. The obstacle information may include a moving object or blocking object blocking the FOV 114. On determining the obstacle information, a warning may be indicated on the system 100. Further, an obstructed image 804 may be viewed on the user interface 602 of the communication device 120. In some embodiments, the user may navigate back to see the stored at least one reference image as indicated by an arrow 806.

It will be apparent to one skilled in the art that the detection of the one or more zones and execution of further processing steps may be performed by the one or more processors 106 of the system 100 using the at least one imaging device 104 and the one or more sensors 102, without departing from the scope of the disclosure.

In the various embodiments, the corresponding one or more zones may be of any arbitrary shape chosen by the user using a Graphical User Interface (GUI) (not shown). The arbitrary shape may include circular shape, cloud shape, triangular shape, or any other shape that do not conform to typical geometric patterns.

In the disclosed embodiments, the system 100 may employ various image processing techniques known in the art to analyze the FOV 114 of the captured one or more real time images.

It will be apparent that the above-mentioned components of the system 100 have been provided only for illustration purposes. In another embodiment, the system 100 may include other components such as a controller unit, a microprocessor unit (MPU), a microcontroller unit (MCU), etc., without departing from the scope of the disclosure.

FIG. 9 illustrates a flowchart showing steps of a method 900 for determining misalignment and obstacle information, in accordance with an example embodiment of the present disclosure. FIG. 9 is described in conjunction with FIGS. 1-8.

At first, the method 900 includes detecting, via the one or more sensors 102, the one or more targets within the FOV 114 of the one or more sensors 102, at step 902. In some embodiments, the one or more sensors 102 may include one or more infrared (IR) sensors, flame sensors, or photodiodes. Further, the FOV 114 may comprise the array of pixels. For example, one or more sensors 102 may detect one or more targets in the industrial area within the FOV 114 of the one or more sensors 102 by analyzing the FOV 114.

Successively, the method 900 includes capturing, via the at least one imaging device 104, the one or more real time images of the one or more targets within the FOV 114, at step 904. Further, each pixel of the array of pixels may be associated with corresponding one or more zones defined by the user. For example, an IR camera may capture one or more real time images of the industrial area within the FOV 114, and each image from the captured one or more real time images may comprise an array of pixels, representing the details and information captured by the IR camera.

Successively, the method 900 includes receiving, via the one or more processors 106, the one or more real time images from the at least one imaging device 104, at step 906. In some embodiments, each of the corresponding one or more zones may be defined with a criticality level. The criticality level of each respective zone may be one of non-critical, critical, or highly critical. For example, the one or more processors 106 may receive the captured one or more real time images of the industrial area.

Successively, the method 900 includes comparing, via the one or more processors 106, the one or more real time images with at least one reference image, at step 908. Further, the at least one reference image may be obtained by comparing at least two consecutive real time images from the one or more real time images based at least on one or more coordinates of each of the one or more real time images. In an example embodiment, the one or more coordinates may include at least x, y and z coordinates. In some embodiments, the one or more processors 106 may split the one or more real time images into the plurality of IR channels. Further, the one or more processors 106 may mask the plurality of IR channels with the one or more zones with the criticality level.

In some embodiments, the one or more processors 106 may identify the plurality of key points. The plurality of key points may comprise the bright contrast edge, curved coordinate points, or the bright contrast edge and curve coordinate points on the masked plurality of IR channels. For example, the one or more processors 106 may compare the one or more real time images of the industrial area, with the at least one reference image to determine the misalignment information and/or the obstacle information.

Successively, the method 900 includes determining, via the one or more processors 106, the misalignment information, obstacle information, or misalignment and obstacle information within the FOV 114 based at least on the comparison, at step 910. In some embodiments, the one or more processors 106 may be configured to determine change in coordinates of the one or more sensors 102 for the set time delay specified by the user to determine the misalignment information based at least on the comparison. Further, for the determination of misalignment information, the plurality of IR channels may be masked based on the identified key points. Further, for the determination of obstacle information, the plurality of IR channels may be masked based on the criticality level.

For example, based on the comparison, a misalignment in the one or more captured real time images may be determined or an obstacle blocking the FOV 114 may be determined for proper installation of the system 100 near the industrial area.

FIG. 10 illustrates a flowchart showing steps of a method 1000 for determining misalignment information, in accordance with an example embodiment of the present disclosure. FIG. 10 is described in conjunction with FIG. 9.

At first, the at least one imaging device 104 displays the overlapped circle 300 with respect to distance to indicate the FOV 114, at step 1002. Successively, the FOV 114 is confirmed, at step 1004. Successively, one or more zones are defined in the FOV 114, at step 1006. Further, the one or more sensors 102 may detect the one or more targets within the FOV 114 of the one or more sensors 102, as explained in step 902.

Successively, user sets time delay(s), at steps 1008. In one example embodiment, the user set time delay may include 30 frames per second (fps) for 5 seconds that 5*30 fps. Successively, enable/start monitoring, at step 1010. In some embodiments, the one or more sensors 102 and the at least one image capturing device 104 may monitor the one or more targets within the FOV 114. In some embodiments, the steps 1002-1010 may form a configuration to determine the misalignment information.

Successively, an image T is captured, at step 1012. The at least one imaging device 104 may capture the image T, at T seconds, of the one or more targets within the FOV 114, as explained in step 904. Further, the one or more processors 106 may receive the captured image T, as explained in step 906. Successively, separate into the plurality of IR channels, at step 1014. In some embodiments, the captured image T may be separated into the plurality of IR channels. Successively, at least one filter is used for masking, at step 1016. The one or more processors 106 may mask the plurality of IR channels with the one or more zones with the criticality level, via the at least one filter.

Successively, the plurality of key points is identified based on the plurality of IR channels picking up bright contrast edge, curve coordinate points on the masked image T, at step 1018. In one example embodiment, the plurality of key points may include one or more coordinates of the captured image T. In an example embodiment, the one or more coordinates may include at least x, y and z coordinates. Successively, the image T and T+1 are compared to check if there is any difference in one or more coordinates, at step 1020. In one case, if there is no difference in the one or more coordinates, then proceed to step 1012 to capture another image.

Successively, an image T is captured as a reference, at step 1022. In another case, if there is a difference in one or more coordinates, then the captured image T may be stored as the at least one reference image. Successively, the image T with T+2, T+3 for 30fps*user set delay in seconds is compared, at step 1024. In some embodiments, the user set delay in seconds may correspond to the user set time delay in seconds. Further, the one or more processors 106 may compare the image T+2, T+3 with the reference image T, as explained in step 908. In one case, if there is no change in one or more coordinate, then proceed to step 1012 to capture another image. Successively, at least one accelerometer checks x, y, z coordination change for user set time delay in seconds, at step 1026. In another case, if there is change in one or more coordinates, then at least one accelerometer may further check any change in the one or more coordinates for the user set time delay. In one case, if there is no change in one or more coordinates, then proceed to step 1012 to capture another image. Successively, misalignment information is reported, at step 1028. In another case if there is change in the one or more coordinates, then the misalignment information may be reported. In some embodiments, the one or more processors 106 may determine the misalignment information within the FOV 114, as explained in step 910.

In some embodiments, the steps 1012-1028 may be performed by one or more processors 106 to determine the misalignment information within the FOV 114.

FIG. 11 illustrates a flowchart showing steps of a method 1100 for determining obstacle information, in accordance with an example embodiment of the present disclosure. FIG. 11 is described in conjunction with FIG. 9.

At first, the at least one imaging device 104 displays the overlapped circle 300 with respect to distance to indicate the FOV 114, at step 1102. Successively, the FOV 114 is confirmed, at step 1104. Successively, one or more zones are defined in the FOV 114, at step 1106. Further, the one or more sensors 102 may detect the one or more targets within the FOV 114 of the one or more sensors 102, as explained in step 902.

Successively, user set time delay(s), at steps 1108. In one example embodiment, the user set time delay may include 30 frames per second (fps) for 5 seconds that is 5*30 fps. Successively, enable/start monitoring, at step 1110. In some embodiments, the one or more sensors 102 and the at least one image capturing device 104 may monitor the one or more target within the FOV 114. In some embodiments, the steps 1102-1110 may form a configuration to determine the obstacle information.

Successively, an image T is captured, at step 1112. The at least one imaging device 104 may capture the image T, at T seconds, of the one or more targets within the FOV 114, as explained in step 904. Further, the one or more processors 106 may receive the captured image T, as explained in step 906. Successively, separate into the plurality of IR channels, at step 1114. In some embodiments, the captured image T may be separated into the plurality of IR channels Successively, at least one filter for masking, at step 1116. The one or more processors 106 may mask the plurality of IR channels with the one or more zones with the criticality level, via the at least one filter.

Successively, the plurality of key points is identified based on the plurality of IR channels picking up bright contrast edge, curve coordinate points on the masked image T, at step 1118. In one example embodiment, the plurality of key points may include one or more coordinates of the captured image T. The one or more coordinates may include at least x, y and z coordinates. Successively, the image T and T+1 are compared to check if there is any difference in one or more coordinates, at step 1120. In one case, if there is no difference in one or more coordinates, then proceed to step 1112 to capture another image.

Successively, an image T is captured as a reference, at step 1122. In another case, if there is difference in one or more coordinate, the captured image T may be stored as the at least one reference image. Successively, the image T with T+2, T+3 for 30fps*user set delay in seconds is compared, at step 1124. In some embodiments, the user set delay in seconds may correspond to the user set time delay in seconds. In one case, if there is no change in one or more coordinates, then proceed to step 1112 to capture another image. Further, the one or more processors 106 may compare the image T+2, T+3 with the reference image T, as explained in step 908. Successively, obstacle information is reported, at step 1126. In another case, if there is change in one or more coordinates, then the obstacle information may be reported, based at least on the comparison. In some embodiments, the one or more processors 106 may determine the obstacle information within the FOV 114, as explained in step 910.

In some embodiments, the steps 1112-1126 may be performed by the one or more processors 106 to determine the misalignment information within the FOV 114.

It will be appreciated that the method(s) 900, 1000, and 1100 may be implemented by one or more the embodiments disclosed herein, which may be combined or modified as desired or needed. Additionally, the steps in the method(s) 900, 1000, 1100 may be modified, changed in order, performed differently, performed sequentially, concurrently or simultaneously, or otherwise modified as desired or needed.

The above-mentioned embodiments of the present disclosure may be executed by the one or more processors 106 of the system 100 and the method(s) 900, 1000, 1100 using the one or more sensors 102 and the at least one imaging device 104, without departing from the scope of the disclosure. In some embodiments, the system 100 and the method (s) 900, 1000, and 1100 may provide precise misalignment and obstacle information within a FOV. The system 100 may be installed at high risk environments such as manufacturing unit, oil refineries, coal mines, etc. to immediately alert about any misalignment or obstacle that may hinder the flame detection within the FOV. The system 100 and the method(s) 900, 1000, 1100 may provide misalignment and obstacle information without any human interference.

Many modifications and other embodiments of the disclosure set forth herein will come to mind to one skilled in the art to which the present disclosure pertains having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A system comprising:

   one or more sensors configured to detect one or more targets within a field of view (FOV) of the one or more sensors;
   at least one imaging device installed based on a distance between the one or more sensors, the one or more targets, and the FOV of the one or more sensors, wherein the at least one imaging device is configured to capture one or more real time images of the one or more targets within the FOV; and
   one or more processors communicatively coupled to the one or more sensors and the at least one imaging device, wherein the one or more processors are configured to:

      receive the one or more real time images from the at least one imaging device;
      compare the one or more real time images with at least one reference image; and
      determine a misalignment information, obstacle information, or misalignment and obstacle information within the FOV based at least on the comparison.

2. The system of claim 1, wherein the FOV comprises an array of pixels, wherein each pixel of the array of pixels is associated with a corresponding one or more zones defined by a user.

3. The system of claim 2, wherein each of the corresponding one or more zones are further defined with a criticality level, wherein the criticality level of each respective zone is one of non-critical, critical, or highly critical.

4. The system of claim 3, wherein the one or more processors are further configured to split the one or more real time images into a plurality of infrared (IR) channels, and wherein the plurality of IR channels are masked with the one or more zones defined with the criticality level using at least one filter.

5. The system of claim 4, wherein the one or more processors are further configured to identify a plurality of key points, wherein the plurality of key points comprising a bright contrast edge, curved coordinate points, or the bright contrast edge and curved coordinate points on the masked plurality of IR channels.

6. The system of claim 1, wherein the at least one reference image is being obtained by comparing at least two consecutive real time images from the one or more real time images based at least on one or more coordinates of each of the one or more real time images.

7. The system of claim 6, wherein at least one accelerometer is configured to determine change in the one or more coordinates of the one or more sensors for a set time delay specified by a user to determine the misalignment information based at least on the comparison of the at least two consecutive real time images.

**8.** The system of claim 3, wherein the non-critical zone corresponds to a zone in which misalignment and/or obstacle is not to be detected, highly critical zone corresponds to a zone in which misalignment and/or obstacle is detected, and a critical zone corresponds to a zone in which misalignment or obstacle is to be detected.

**9.** The system of claim 3, wherein for a determination of obstacle information, the plurality of IR channels are masked based on the criticality level.

**10.** The system of claim 1, wherein the one or more sensors and the at least one imaging device are spatially calibrated to maintain same or similar FOV.

**11.** The system of claim 1, wherein the one or more processors are further configured to send one or more notifications, via a communication device, to a user or a remote server based at least on the determined misalignment information, obstacle information, or misalignment and obstacle information within the FOV.

**12.** A method comprising:

detecting, via one or more sensors, one or more targets within a field of view (FOV) of the one or more sensors;
capturing, via at least one imaging device, one or more real time images of the one or more targets within the FOV;
receiving, via one or more processors, the one or more real time images from the at least one imaging device;
comparing, via the one or more processors, the one or more real time images with at least one reference image; and
determining, via the one or more processors, misalignment information, obstacle information, or misalignment and obstacle information within the FOV based at least on the comparison.

**13.** The method of claim 12, wherein the FOV comprises an array of pixels and wherein each pixel of the array of pixels is associated with a corresponding one or more zones defined by a user.

**14.** The method of claim 13, wherein each of the corresponding one or more zones are further defined with a criticality level, wherein the criticality level of each respective zone is one of non-critical, critical, or highly critical.

**15.** The method of claim 14 further comprising:

splitting, via the one or more processors, one or more real time images into a plurality of IR channels;
masking, via the one or more processors, the plurality of IR channels with the one or more zones with the criticality level; and
identifying, via the one or more processors, a plurality of key points, wherein the plurality of key points comprising a bright contrast edge, curved coordinate points, or the bright contrast edge and curve coordinate points on the masked plurality of IR channels.
ty of IR channels.

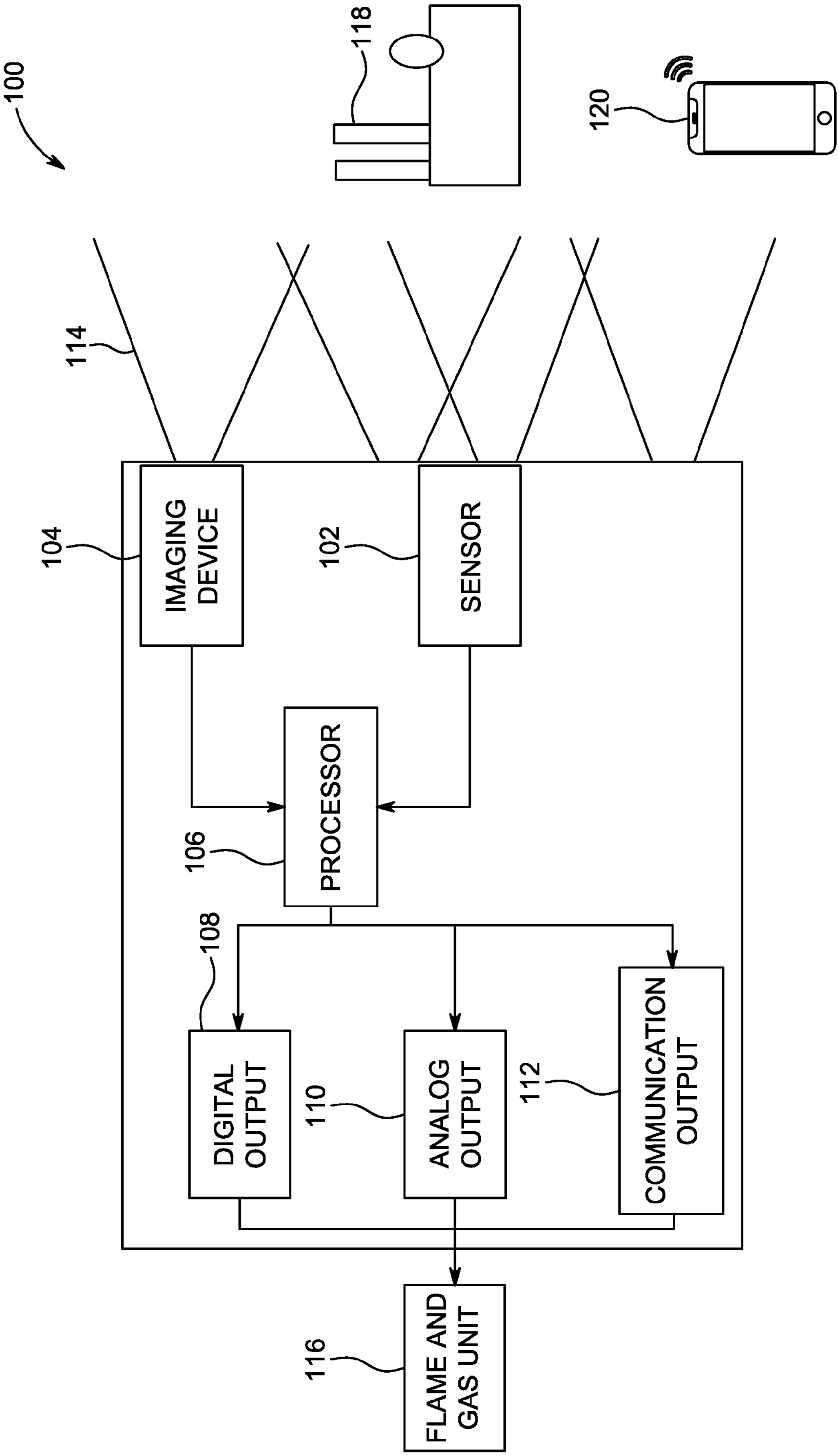
100
118
120
114
104
IMAGING DEVICE
102
SENSOR
106
PROCESSOR
108
DIGITAL OUTPUT
110
ANALOG OUTPUT
112
COMMUNICATION OUTPUT
116
FLAME AND GAS UNIT

FIG. 1

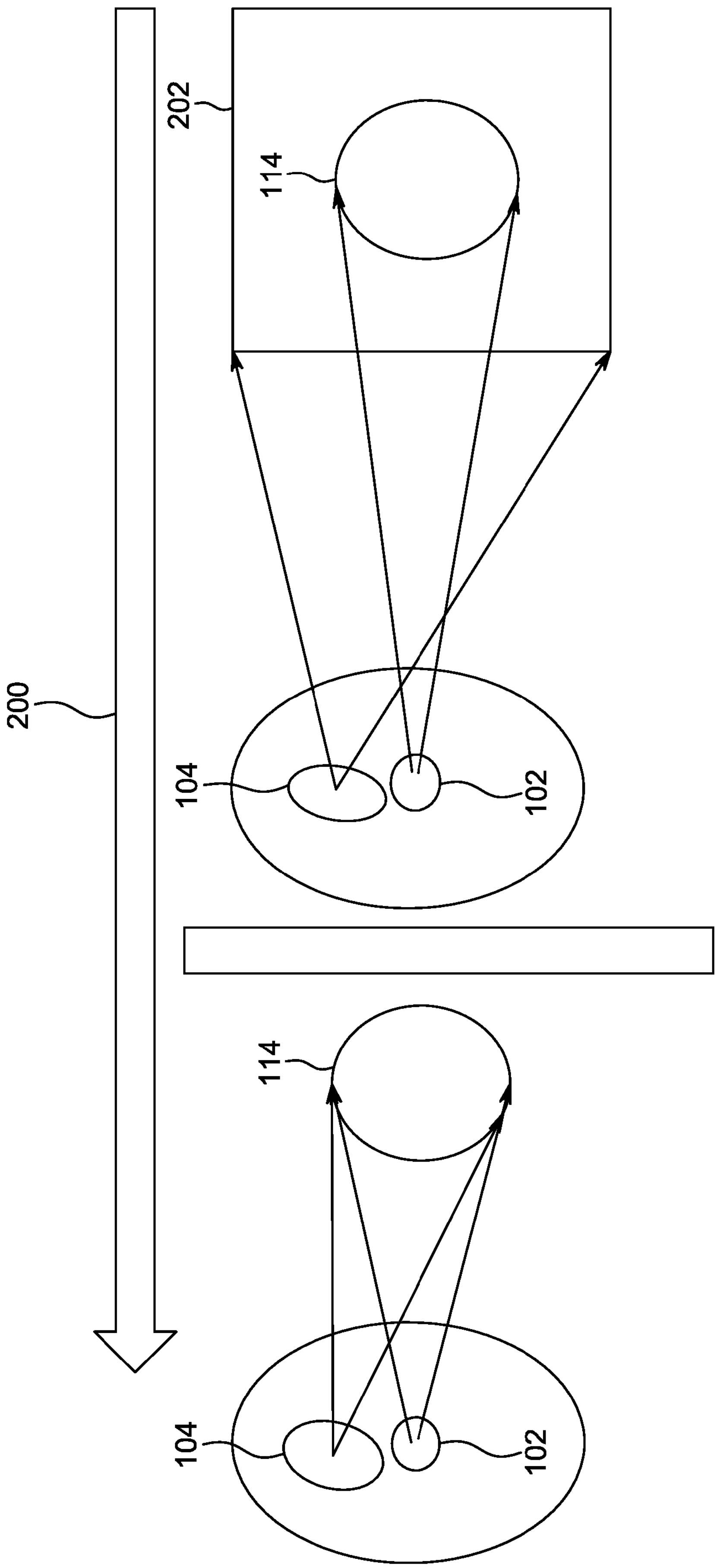


FIG. 2A

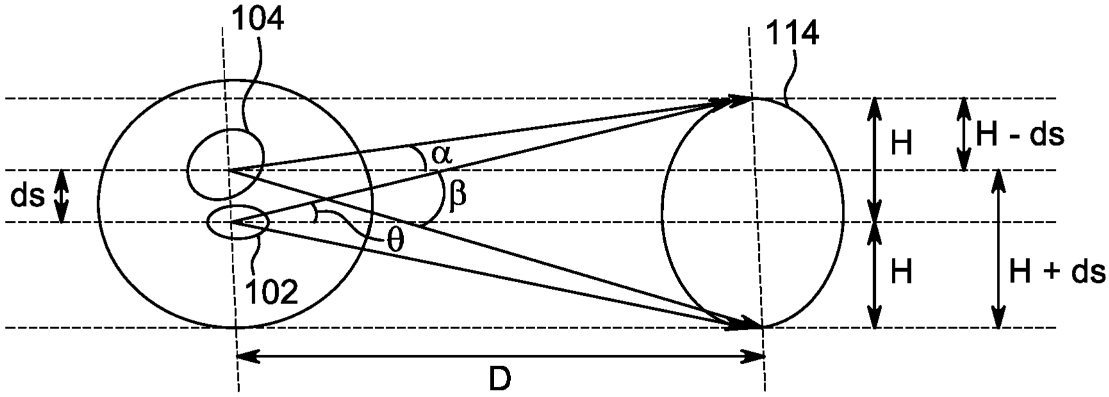


FIG. 2B

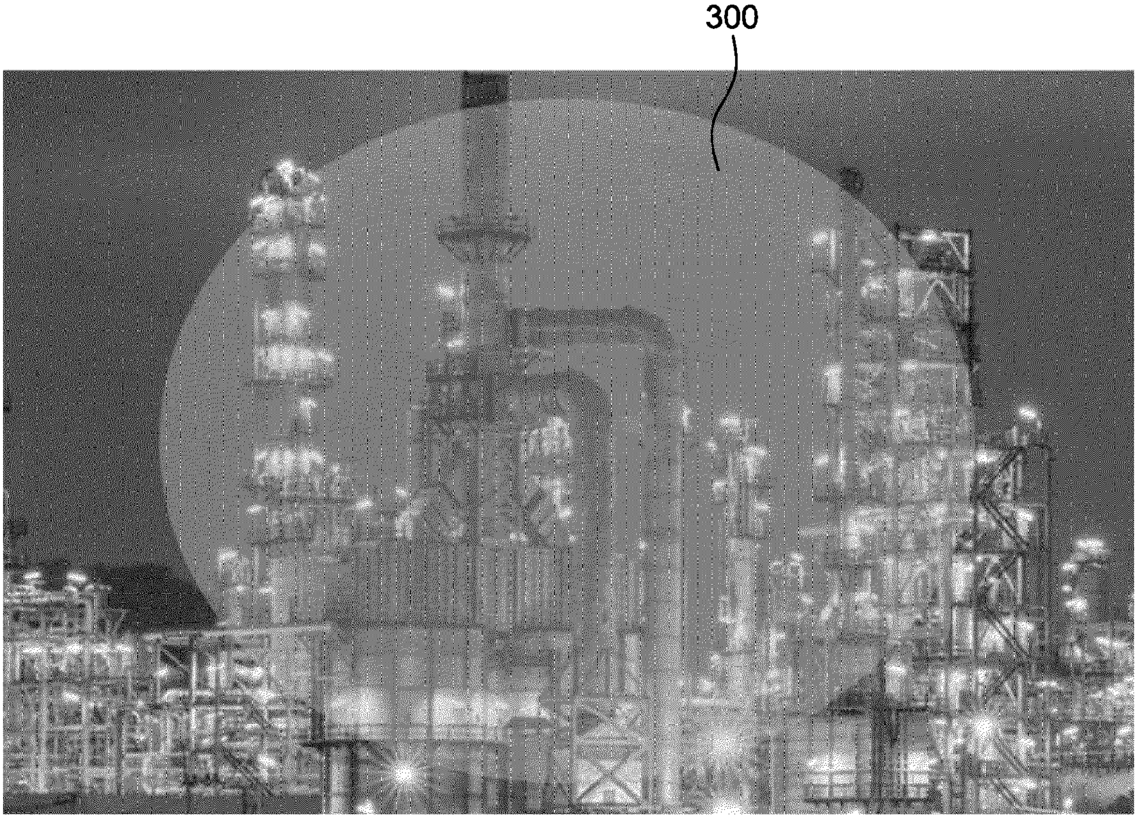


FIG. 3A

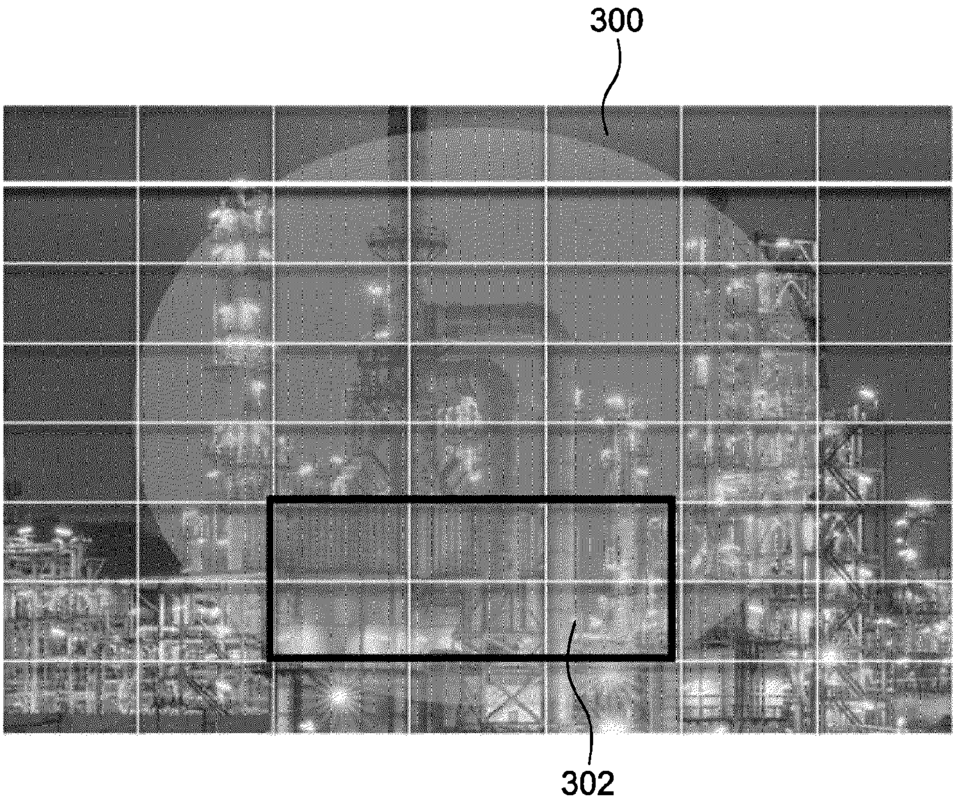


FIG. 3B

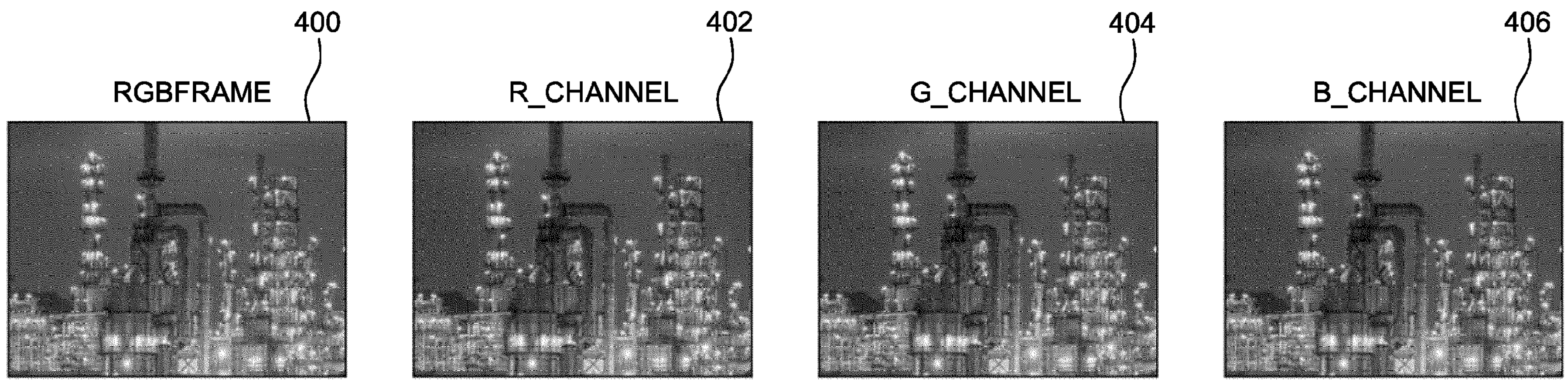
400
RGBFRAME
402
R_CHANNEL
404
G_CHANNEL
406
B_CHANNEL

FIG. 4A

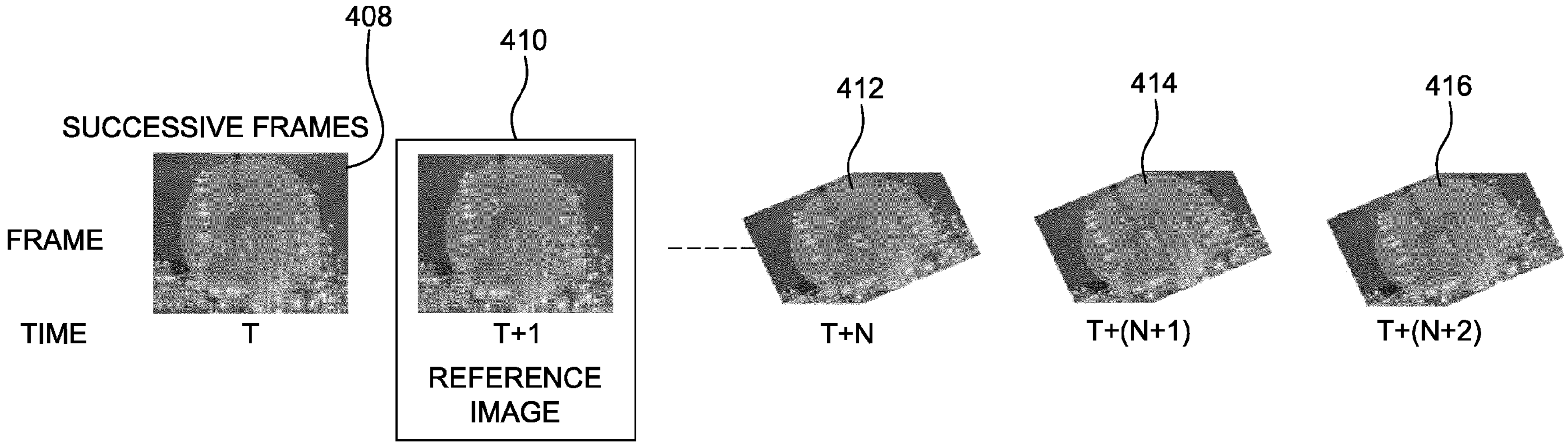
408
SUCCESSIVE FRAMES
410
412
414
416
FRAME
TIME
T
T+1
REFERENCE
IMAGE
T+N
T+(N+1)
T+(N+2)

FIG. 4B

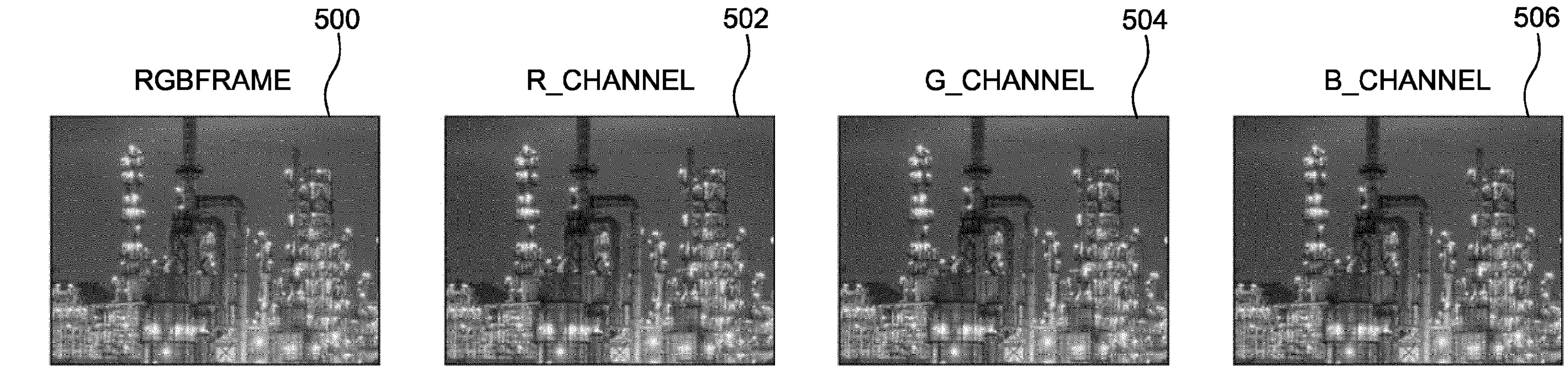
500
RGBFRAME
502
R_CHANNEL
504
G_CHANNEL
506
B_CHANNEL

FIG. 5A

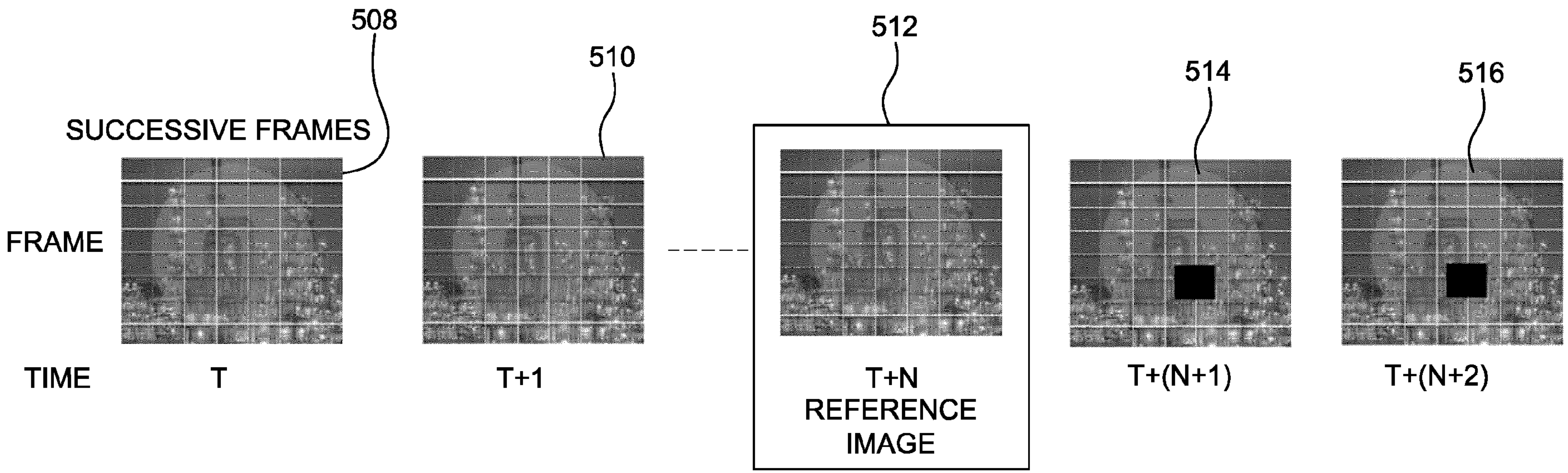
508
SUCCESSIVE FRAMES
FRAME
TIME
T
510
T+1
512
T+N
REFERENCE
IMAGE
514
T+(N+1)
516
T+(N+2)

FIG. 5B

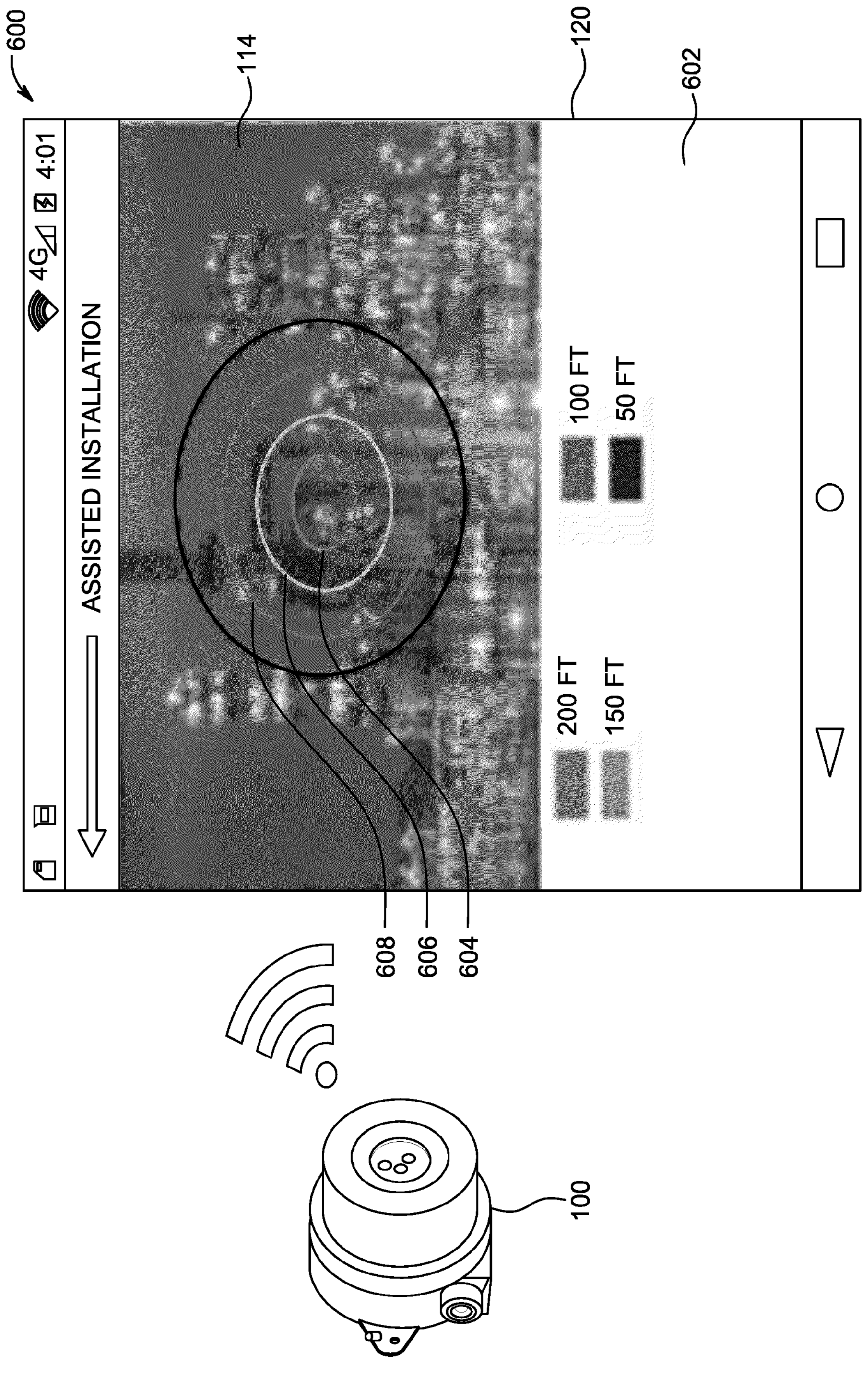
600
114
120
602
4G
4:01
ASSISTED INSTALLATION
100 FT
50 FT
200 FT
150 FT
608
606
604
100

FIG. 6

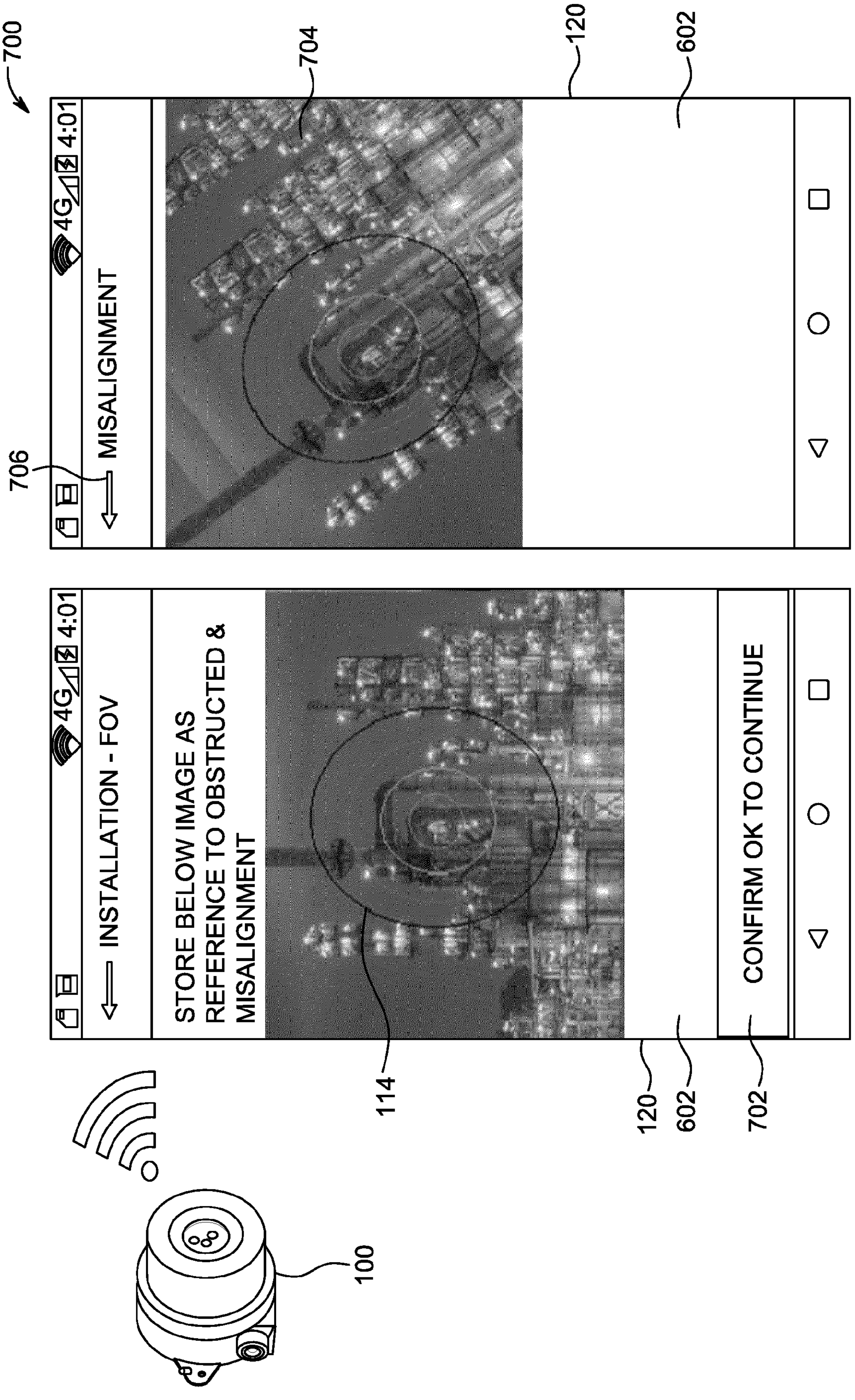
700
706
704
120
602
4G
4:01
MISALIGNMENT
INSTALLATION - FOV
STORE BELOW IMAGE AS REFERENCE TO OBSTRUCTED & MISALIGNMENT
CONFIRM OK TO CONTINUE
114
120
602
702
100

FIG. 7

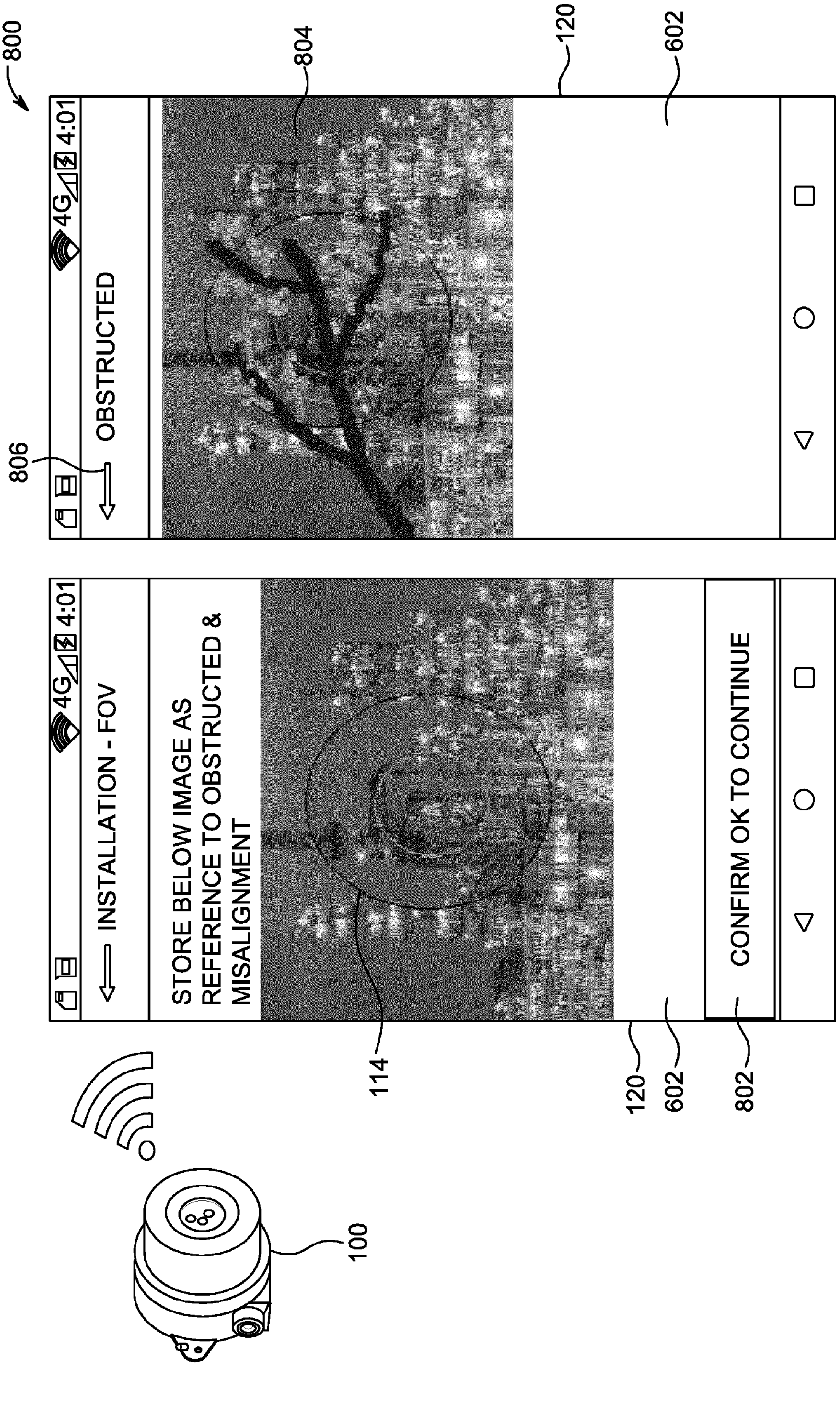
800
806
OBSTRUCTED
4G 4:01
804
120
602
INSTALLATION - FOV
STORE BELOW IMAGE AS REFERENCE TO OBSTRUCTED & MISALIGNMENT
CONFIRM OK TO CONTINUE
114
120
602
802
100

FIG. 8

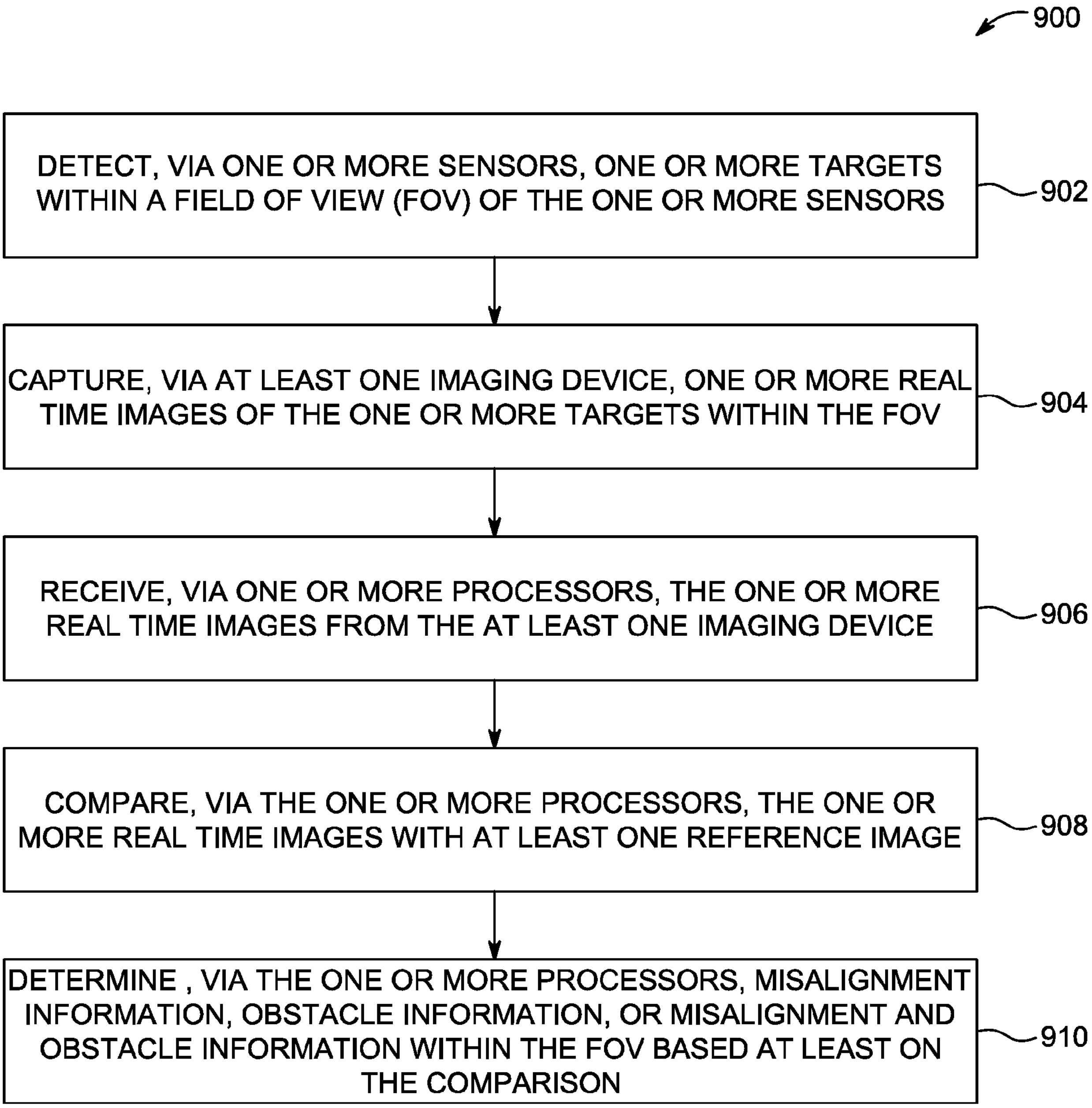
900
DETECT, VIA ONE OR MORE SENSORS, ONE OR MORE TARGETS WITHIN A FIELD OF VIEW (FOV) OF THE ONE OR MORE SENSORS
902
CAPTURE, VIA AT LEAST ONE IMAGING DEVICE, ONE OR MORE REAL TIME IMAGES OF THE ONE OR MORE TARGETS WITHIN THE FOV
904
RECEIVE, VIA ONE OR MORE PROCESSORS, THE ONE OR MORE REAL TIME IMAGES FROM THE AT LEAST ONE IMAGING DEVICE
906
COMPARE, VIA THE ONE OR MORE PROCESSORS, THE ONE OR MORE REAL TIME IMAGES WITH AT LEAST ONE REFERENCE IMAGE
908
DETERMINE , VIA THE ONE OR MORE PROCESSORS, MISALIGNMENT INFORMATION, OBSTACLE INFORMATION, OR MISALIGNMENT AND OBSTACLE INFORMATION WITHIN THE FOV BASED AT LEAST ON THE COMPARISON
910

FIG. 9

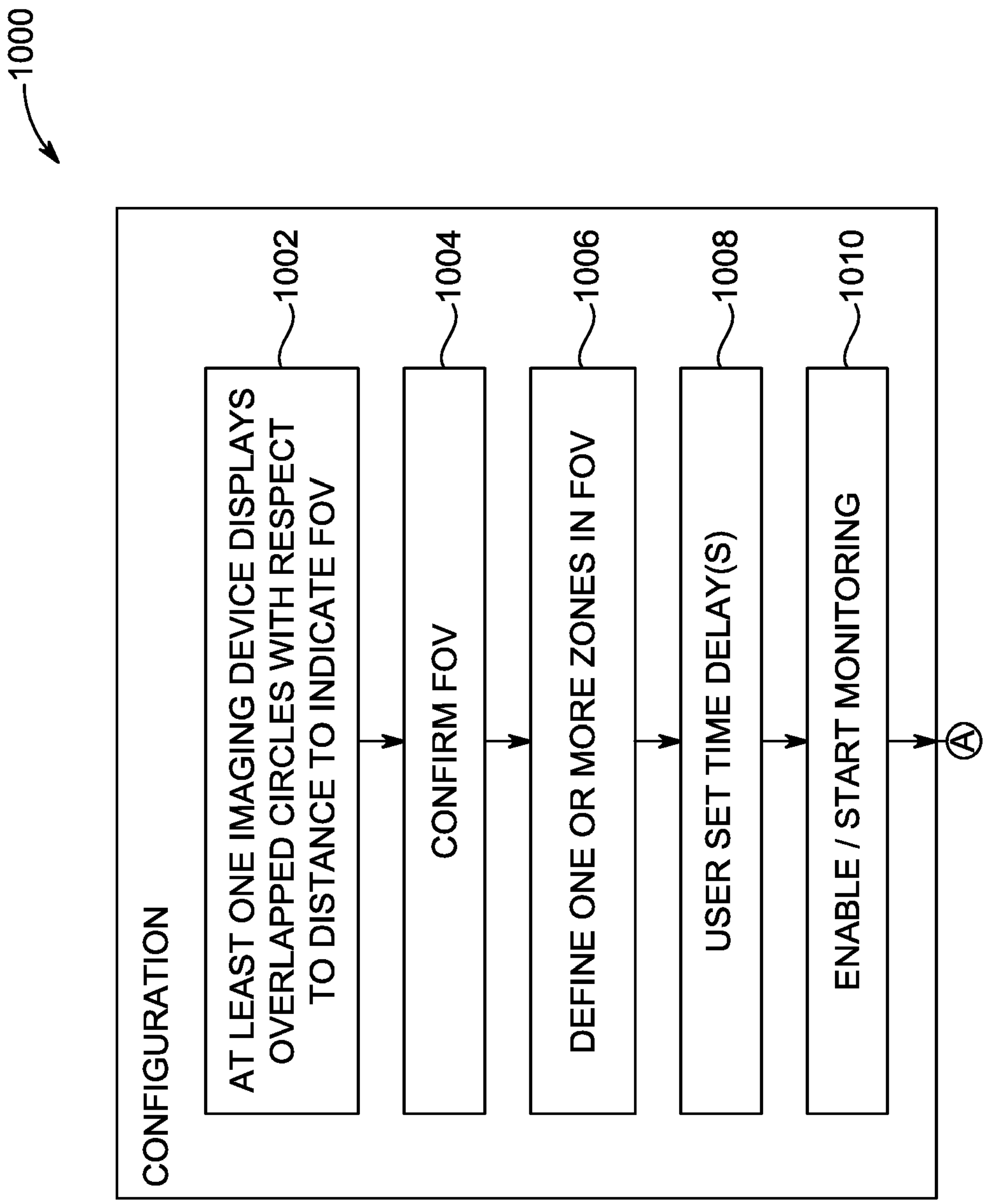
1000
CONFIGURATION
AT LEAST ONE IMAGING DEVICE DISPLAYS OVERLAPPED CIRCLES WITH RESPECT TO DISTANCE TO INDICATE FOV
1002
CONFIRM FOV
1004
DEFINE ONE OR MORE ZONES IN FOV
1006
USER SET TIME DELAY(S)
1008
ENABLE / START MONITORING
1010
A

FIG. 10

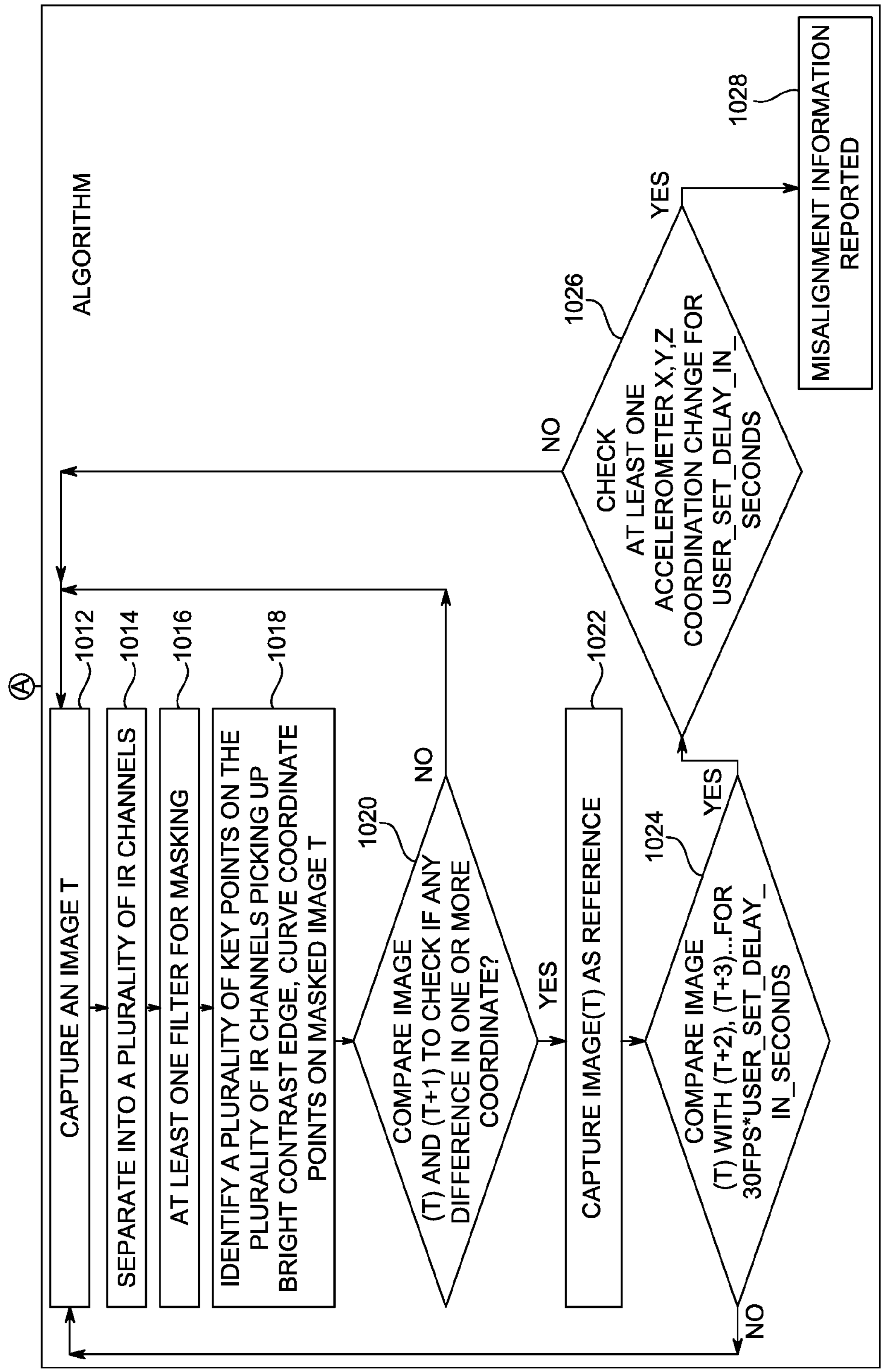


FIG. 10 (Continued)

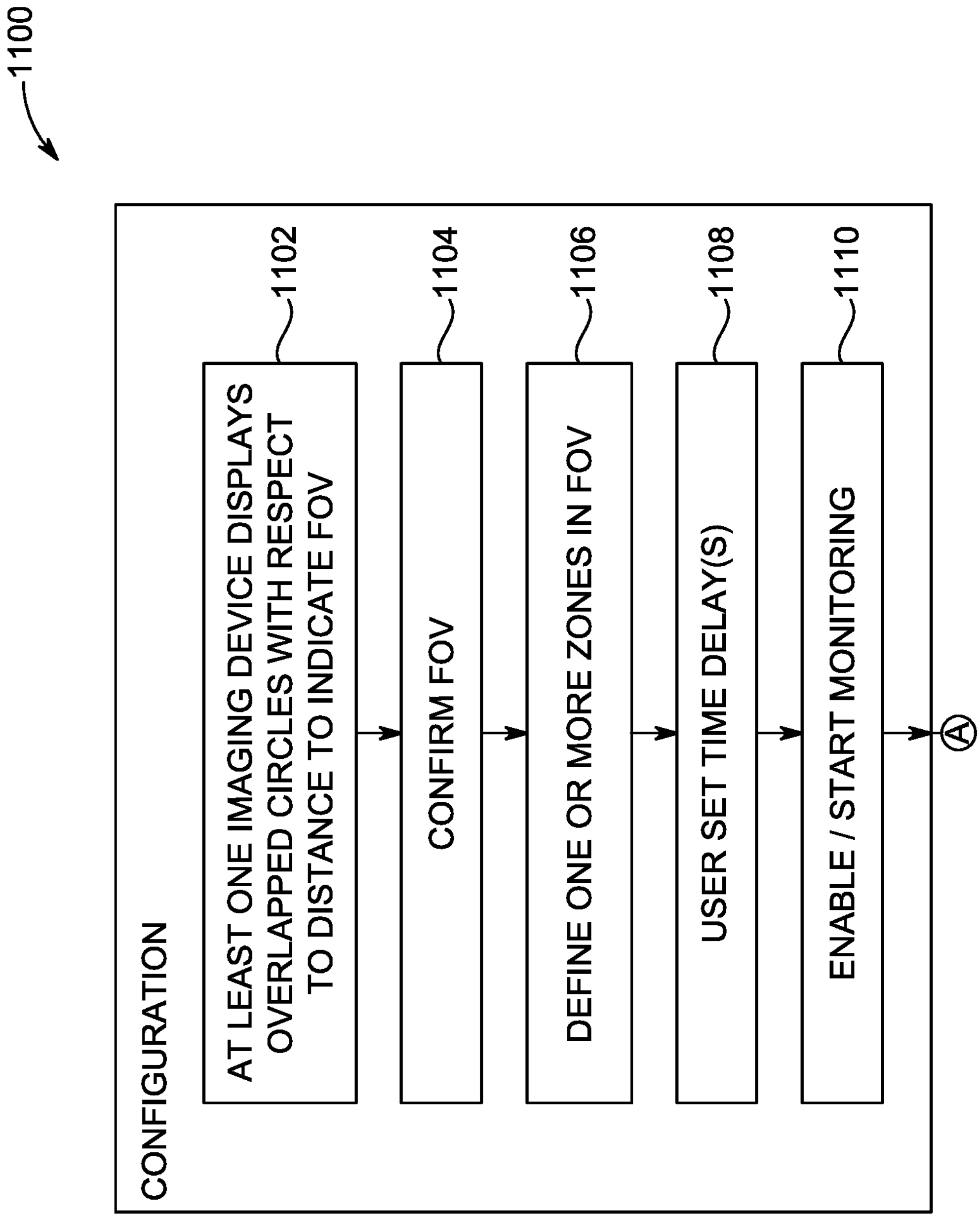
1100
CONFIGURATION
AT LEAST ONE IMAGING DEVICE DISPLAYS OVERLAPPED CIRCLES WITH RESPECT TO DISTANCE TO INDICATE FOV
1102
CONFIRM FOV
1104
DEFINE ONE OR MORE ZONES IN FOV
1106
USER SET TIME DELAY(S)
1108
ENABLE / START MONITORING
1110
A

FIG. 11

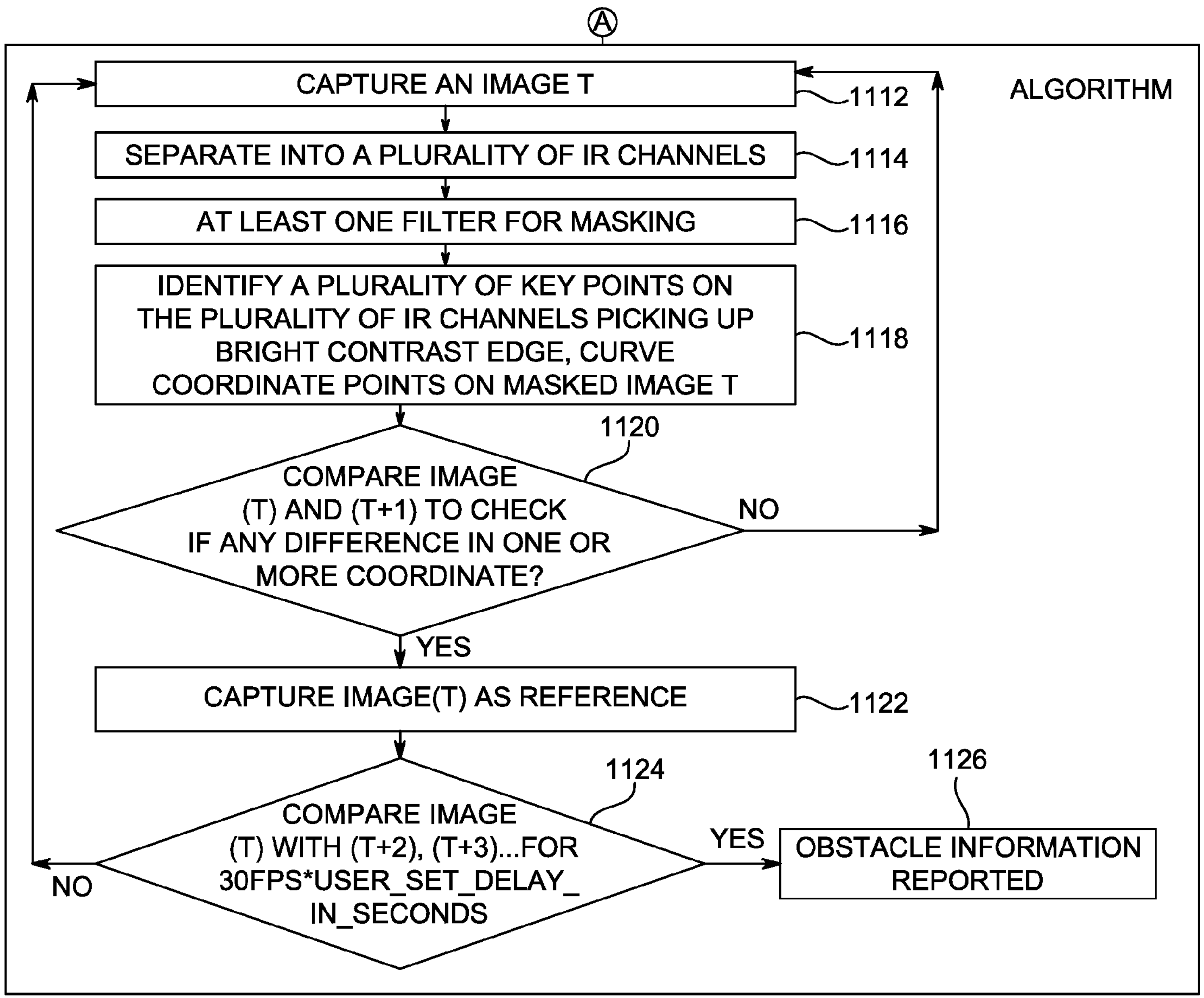


FIG. 11 (Continued)

Europäisches Patentamt
European Patent Office
Office européen des brevets

# EUROPEAN SEARCH REPORT

Application Number
EP 24 21 3759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/276588 A1 (KNOX RONALD [AU] ET AL) 28 September 2017 (2017-09-28) * figures 1,2 * * paragraphs [0099] - [0104], [0257] - [0259] * | 1-15 | INV. G01J1/02 G01J5/00 G01N21/15 G01J5/08 ADD. G01J5/02 |
| X | EP 4 116 702 A1 (REBELLION PHOTONICS INC [US]) 11 January 2023 (2023-01-11) * figures 1,4,6,8 * * paragraphs [0003], [0017], [0018], [0031], [0066], [0070], [0081], [0091] - [0108] * | 1-15 | |
| X | CN 201 259 717 Y (GUOFENG DING [CN]) 17 June 2009 (2009-06-17) * abstract; figure 1 * * paragraphs [0006], [0060] - [0083], [0096] - [0098], [0118] - [0123], [0158] - [0163], [0167] * | 1-15 | |
| A | JP 4 926602 B2 (NOHMI BOSAI LTD; UNIV TOKUSHIMA) 9 May 2012 (2012-05-09) * abstract; figures 1-5 * * paragraphs [0027], [0028], [0069] * | 1-15 | TECHNICAL FIELDS SEARCHED (IPC) G01J G01N G08B |
| A | US 2011/304728 A1 (OWRUTSKY JEFFREY C [US] ET AL) 15 December 2011 (2011-12-15) * figures 1-3 * * paragraph [0025] - paragraph [0037] * | 1-15 | |

The present search report has been drawn up for all claims

2

| Place of search | Date of completion of the search | Examiner |
|---|---|---|
| Munich | 17 April 2025 | Gangl, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 21 3759

This annex lists the patent family members relating to the patent documents cited in the above-mentioned European search report. The members are as contained in the European Patent Office EDP file on
The European Patent Office is in no way liable for these particulars which are merely given for the purpose of information.

17-04-2025

| Patent document cited in search report | Publication date | Patent family member(s) | Publication date |
|---|---|---|---|
| US 2017276588 A1 | 28-09-2017 | AU 2008323626 A1 | 22-05-2009 |
| | | CA 2705830 A1 | 22-05-2009 |
| | | CA 2993208 A1 | 22-05-2009 |
| | | CA 3103407 A1 | 22-05-2009 |
| | | CN 101952709 A | 19-01-2011 |
| | | CN 105185026 A | 23-12-2015 |
| | | CN 109255924 A | 22-01-2019 |
| | | EP 2217911 A1 | 18-08-2010 |
| | | EP 3082117 A1 | 19-10-2016 |
| | | EP 3367358 A2 | 29-08-2018 |
| | | HK 1217807 A1 | 20-01-2017 |
| | | JP 5662154 B2 | 28-01-2015 |
| | | JP 6030092 B2 | 24-11-2016 |
| | | JP 6523220 B2 | 29-05-2019 |
| | | JP 2011503581 A | 27-01-2011 |
| | | JP 2015014606 A | 22-01-2015 |
| | | JP 2016218075 A | 22-12-2016 |
| | | KR 20100110783 A | 13-10-2010 |
| | | KR 20160067187 A | 13-06-2016 |
| | | KR 20170018086 A | 15-02-2017 |
| | | TW 200925577 A | 16-06-2009 |
| | | TW 201538953 A | 16-10-2015 |
| | | TW 201734428 A | 01-10-2017 |
| | | US 2011058167 A1 | 10-03-2011 |
| | | US 2015241330 A1 | 27-08-2015 |
| | | US 2017276588 A1 | 28-09-2017 |
| | | US 2020056973 A1 | 20-02-2020 |
| | | WO 2009062256 A1 | 22-05-2009 |
| EP 4116702 A1 | 11-01-2023 | CN 111527397 A | 11-08-2020 |
| | | EP 3707497 A1 | 16-09-2020 |
| | | EP 4116702 A1 | 11-01-2023 |
| | | EP 4379331 A2 | 05-06-2024 |
| | | US 2019137388 A1 | 09-05-2019 |
| | | US 2020132596 A1 | 30-04-2020 |
| | | US 2021072150 A1 | 11-03-2021 |
| | | US 2021116362 A1 | 22-04-2021 |
| | | US 2022196548 A1 | 23-06-2022 |
| | | US 2022326147 A1 | 13-10-2022 |
| | | US 2023243743 A1 | 03-08-2023 |
| | | US 2023358673 A1 | 09-11-2023 |
| | | US 2024280480 A1 | 22-08-2024 |
| | | WO 2019094639 A1 | 16-05-2019 |
| CN 201259717 Y | 17-06-2009 | NONE | |

EPO FORM P0459

For more details about this annex : see Official Journal of the European Patent Office, No. 12/82

page 1 of 2

# ANNEX TO THE EUROPEAN SEARCH REPORT ON EUROPEAN PATENT APPLICATION NO.

EP 24 21 3759

This annex lists the patent family members relating to the patent documents cited in the above-mentioned European search report. The members are as contained in the European Patent Office EDP file on
The European Patent Office is in no way liable for these particulars which are merely given for the purpose of information.

17-04-2025

| Patent document cited in search report | Publication date | Patent family member(s) | Publication date |
|---|---|---|---|
| JP 4926602 B2 | 09-05-2012 | JP 4926602 B2<br>JP 2008046916 A | 09-05-2012<br>28-02-2008 |
| US 2011304728 A1 | 15-12-2011 | NONE | |

EPO FORM P0459

For more details about this annex : see Official Journal of the European Patent Office, No. 12/82